# EUROPEAN PATENT APPLICATION

(11) **EP 3 749 038 A1**
(43) Date of publication of application: **09.12.2020**
(21) Application number: 19781144.1
(22) Date of filing: 02.04.2019
(51) Int. Cl.: H04W 72/12

(54) **INFORMATION TRANSMISSION METHOD, APPARATUS, AND READABLE STORAGE MEDIUM**

(30) Priority: 04.04.2018 CN 201810299289
(71) Applicant: Huawei Technologies Co., Ltd., Longgang Shenzhen, Guangdong 518129 (CN)
(72) Inventor: YANG, Fan, Shenzhen, Guangdong 518129 (CN); XUE, Lixia, Shenzhen, Guangdong 518129 (CN); SUN, Hao, Shenzhen, Guangdong 518129 (CN)
(74) Representative: Körber, Martin Hans
(86) International application number: PCT/CN2019/080941
(87) International publication number: WO 2019/192452

(57) **Abstract**

This application provides an information transmission method and apparatus, and a readable storage medium. The method includes: receiving downlink data sent by a network device, where a time-frequency resource used to carry hybrid automatic repeat request HARQ information that needs to be fed back for the downlink data and a time-frequency resource used to carry scheduling request SR information partially overlap in time domain, and a configured time of sending the SR information is earlier than a configured time of sending the HARQ information; and at the configured time of sending the SR information, when the SR information is positive and the HARQ information is not obtained, sending hybrid automatic repeat request negative acknowledgement HARQ-NACK information on the time-frequency resource used to carry the SR information. The technical solutions provided in this application further specify content of HARQ information that needs to be sent by a terminal device to a network device, to avoid understanding inconsistency between the network device (for example, a base station) and the terminal device (for example, user equipment UE).

## Description

This application claims priority to Chinese Patent Application No. 201810299289.X, filed with the Chinese Patent Office on April 4, 2018 and entitled "INFORMATION TRANSMISSION METHOD AND APPARATUS, AND READABLE STORAGE MEDIUM", which is incorporated herein by reference in its entirety.

### TECHNICAL FIELD

This application relates to the communications field, and more specifically, to an information transmission method and apparatus, and a readable storage medium.

### BACKGROUND

In a wireless communications system, a network device (for example, a base station) and a terminal device usually use a hybrid automatic repeat request (hybrid automatic repeat request, HARQ) mechanism to improve communication reliability. A physical uplink control channel (physical uplink control channel, PUCCH) may be used to simultaneously send scheduling request (scheduling request, SR) information and hybrid automatic repeat request (hybrid automatic repeat request, HARQ) information on a specified time domain resource.

A time-frequency resource used to carry the HARQ information partially overlaps a time-frequency resource used to carry the scheduling request (scheduling request, SR) information (that is, the SR information and the HARQ information have start orthogonal frequency division multiplexing (orthogonal frequency division multiplexing, OFDM) symbols or end orthogonal frequency division multiplexing symbols or time lengths that are not completely the same). In this scenario, when the HARQ information and the SR information need to be sent, the HARQ information is transmitted on an SR resource in the prior art. However, the solution in the prior art cannot meet feedback in all application scenarios in which the time-frequency resource carrying the HARQ information partially overlaps the time-frequency resource carrying the SR information. As a result, understanding inconsistency may occur between the network device and the terminal device.

### SUMMARY

This application provides an information transmission method and apparatus, and a readable storage medium, and further specifies content of HARQ information that needs to be sent by a terminal device to a network device, to avoid understanding inconsistency between the network device (for example, a base station) and the terminal device (for example, user equipment UE).

According to a first aspect, an information transmission method applied to a terminal device is provided. The method includes: receiving downlink data sent by a network device, where a time-frequency resource used to carry hybrid automatic repeat request HARQ information that needs to be fed back for the downlink data and a time-frequency resource used to carry scheduling request SR information partially overlap in time domain, and a configured time of sending the SR information is earlier than a configured time of sending the HARQ information; and at the configured time of sending the SR information, when the SR information is positive and the HARQ information is not obtained, sending hybrid automatic repeat request negative acknowledgement HARQ-NACK information on the time-frequency resource used to carry the SR information.

In the foregoing technical solution, when the time-frequency resource carrying the HARQ information and the time-frequency resource carrying the SR information partially overlap in time domain, if the time of sending the SR information is earlier than the time of sending the HARQ information, the SR information is positive, and the terminal device does not obtain the HARQ information at the time of sending the SR information, the terminal device may send the HARQ-NACK information on the resource carrying the SR information, to indicate that the terminal device has not decoded the downlink data sent by the network device or the terminal device has not generated the HARQ information. This can avoid understanding inconsistency between the network device and the terminal device.

In a possible implementation, the HARQ-NACK information is sent on one or more time-frequency resources used to carry the SR information, where the one or more time-frequency resources carrying the SR information are configured by using one piece of SR configuration information or correspond to a same resource identifier, and the one or more time-frequency resources carrying the SR information and the time-frequency resource carrying the HARQ information partially overlap in time domain.

In a possible implementation, the HARQ-NACK information is sent on the time-frequency resource used to carry the SR information, where the time-frequency resource carrying the SR information is one of a plurality of time-frequency resources configured by using a plurality of pieces of SR configuration information, and the plurality of time-frequency resources are located in a same slot.

In a possible implementation, the time-frequency resource used to carry the HARQ information that needs to be fed back for the downlink data and the time-frequency resource used to carry the SR information are located in a same slot in time domain.

In a possible implementation, at the configured time of sending the SR information, when the SR information is positive and the HARQ information is obtained, hybrid automatic repeat request acknowledgement HARQ-ACK information is sent on the time-frequency resource used to carry the SR information.

According to a second aspect, an information transmission apparatus is provided. The apparatus is a terminal device or a chip in a terminal device. The apparatus includes a transceiver unit and a processing unit that are configured to perform the method according to the first aspect or any implementation of the first aspect. When the apparatus is a terminal device, the processing unit may be a processor, and the transceiver unit may be a transceiver. The transceiver includes a radio frequency circuit. Optionally, the terminal device further includes a storage unit, and the storage unit may be a memory. When the apparatus is a chip in a terminal device, the processing unit may be a processor, and the transceiver unit may be an input/output interface, a pin, a circuit, or the like in the chip. The processing unit may execute a computer executable instruction stored in the storage unit. Optionally, the storage unit may be a storage unit (for example, a register or a cache) in the chip, or may be a storage unit (for example, a read-only memory (read-only memory, ROM)) outside the chip in the terminal device, or another type of static storage device (for example, a random access memory (RAM)) that may store static information and an instruction. The processor mentioned in the foregoing may be a central processing unit (central processing unit, CPU), a microprocessor, or an application-specific integrated circuit (application-specific integrated circuit, ASIC); or may be one or more integrated circuits configured to control program execution of a signal sending method according to any possible implementation of the first aspect.

According to a third aspect, an information transmission apparatus is provided. The information transmission apparatus includes a processor and a transceiver, configured to perform the method according to the foregoing first aspect or any possible implementation of the first aspect.

According to a fourth aspect, a computer readable storage medium is provided. The computer readable storage medium is configured to store a computer program. The computer program enables an information transmission apparatus to perform the method according to the foregoing first aspect or any possible implementation of the first aspect.

According to a fifth aspect, a computer program product is provided. The computer program product includes computer program code. When the computer program code is run on a computer, the computer is enabled to perform the method according to the foregoing first aspect or any possible implementation of the first aspect.

According to a sixth aspect, a chip is provided, including a processor and a memory. The memory is configured to store a computer program. The processor is configured to: invoke the computer program from the memory and run the computer program. The computer program is used to implement the method in the foregoing aspect.

### BRIEF DESCRIPTION OF DRAWINGS

FIG. 1 is a schematic structural diagram of a wireless communications system 100 to which an embodiment of this application is applied;
FIG. 2 is a schematic flowchart of an information transmission method according to an embodiment of this application;
FIG. 3 is a schematic structural diagram in which SR information partially overlaps HARQ information according to an embodiment of this application;
FIG. 4 is a schematic structural diagram in which SR information partially overlaps HARQ information according to another embodiment of this application;
FIG. 5 is a schematic structural diagram in which SR information partially overlaps HARQ information according to another embodiment of this application;
FIG. 6 is a schematic block diagram of an information transmission apparatus according to an embodiment of this application; and
FIG. 7 is a schematic block diagram of another information transmission apparatus according to an embodiment of this application.

### DESCRIPTION OF EMBODIMENTS

The following describes technical solutions of this application with reference to accompanying drawings.

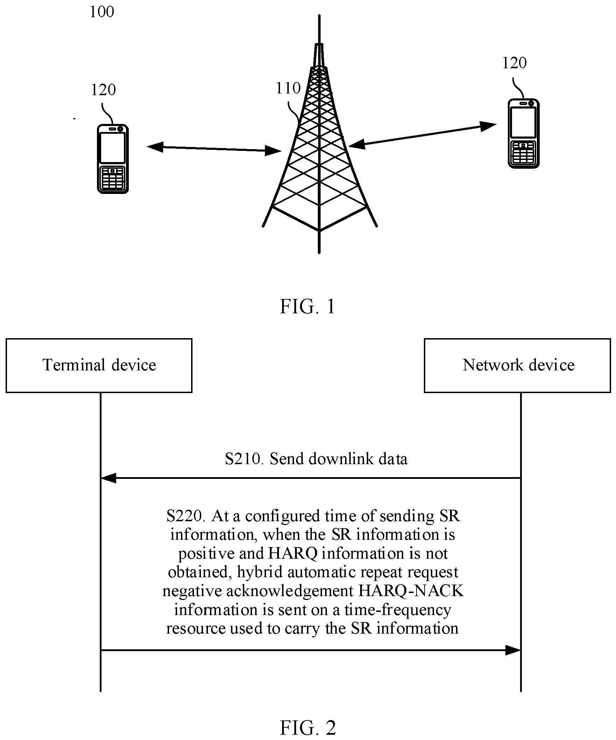

FIG. 1 is a schematic structural diagram of a wireless communications system 100 to which an embodiment of this application is applied. The wireless communications system 100 may include a network device 110. The network device 110 may be a device that communicates with a terminal device 120. The network device 110 can provide communication coverage for a specific geographical area, and can communicate with the terminal device 120 located in the coverage area.

FIG. 1 shows one network device and two terminals as an example. Optionally, the wireless communications system 100 may include a plurality of network devices, and another quantity of terminals may be included in a coverage area of each network device. This is not limited in this embodiment of this application.

Optionally, the wireless communications system 100 may further include other network entities such as a network controller and a mobility management entity. This is not limited in this embodiment of this application.

The technical solutions of the embodiments of this application may be applied to various communications systems, such as: a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (Long Term Evolution, LTE) system, an LTE frequency division duplex (frequency division duplex, FDD) system, an LTE time division duplex (Time Division Duplex, TDD), a universal mobile telecommunications system (universal mobile telecommunication system, UMTS), a worldwide interoperability for microwave access (worldwide interoperability for microwave access, WiMAX) communications system, a future 5th generation (5th generation, 5G) system, or a new radio (new radio, NR) system.

The terminal device in the embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal may include but is not limited to a mobile station (mobile station, MS), a mobile phone (mobile telephone), user equipment (user equipment, UE), a mobile phone (handset), a portable device (portable equipment), a cellular phone, a cordless phone, a session initiation protocol (session initiation protocol, SIP) phone, a wireless local loop (wireless local loop, WLL) station, a personal digital assistant (personal digital assistant, PDA), a radio frequency identification (radio frequency identification, RFID) terminal device for logistics, a handheld device or a computing device that has a wireless communication function, another device connected to a wireless modem, an in-vehicle device, a wearable device, a terminal device in an Internet of things or an Internet of vehicles, a terminal device in a future 5G network, a terminal device in a future evolved public land mobile network (public land mobile network, PLMN), or the like.

As an example instead of a limitation, in this embodiment of this application, the terminal device may be alternatively a wearable device. The wearable device may also be referred to as a wearable intelligent device, and is a generic term of wearable devices, such as glasses, gloves, watches, clothing, and shoes, developed by performing intelligent design on daily wear by using a wearable technology. The wearable device is a portable device directly worn on a body or integrated into clothes or an accessory of a user. The wearable device is more than a hardware device, and implements powerful functions through software support, data interaction, and cloud interaction. In a broad sense, wearable intelligent devices include a large-sized device, for example, a smartwatch or smart glasses, that provide comprehensive functions and that can implement a complete or partial function independent of a smartphone; and include a device, for example, various types of smart bands and smart jewelry for somatic feature monitoring, that is intended for only a specific type of application function and that needs to be used in cooperation with another device such as a smartphone.

A type of the network device is not specifically limited in this embodiment of this application. The network device may be any device configured to communicate with the terminal device. For example, the network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolutional NodeB, eNB or eNodeB) in a long term evolution (long term evolution, LTE) system, or may be a radio controller in a cloud radio access network (cloud radio access network, CRAN) scenario. Alternatively, the network device may be a relay station, an access point, an in-vehicle device, a wearable device, a network device in a future 5G network, a network device in a future evolved PLMN network, or the like.

In a possible manner, the network device may include a centralized unit (centralized unit, CU) and a distributed unit (distributed unit, DU). One CU may be connected to one DU, or a plurality of DUs share one CU, to reduce costs and facilitate network expansion. Division of the CU and the DU may be performed according to protocol stacks. In a possible manner, a radio resource control (radio resource control, RRC) layer, a service data mapping protocol (service data adaptation protocol, SDAP) layer, and a packet data convergence protocol (packet data convergence protocol, PDCP) layer are deployed in the CU; and a remaining radio link control (Radio Link Control, RLC) layer, a media access control (media access control, MAC) layer, and a physical layer are deployed in the DU.

It is indicated in the foregoing that the solution in the prior art cannot meet feedback in all application scenarios in which a time-frequency resource carrying HARQ information partially overlaps a time-frequency resource carrying SR information. As a result, understanding inconsistency may occur between the network device and the terminal device. The following uses the network device and the terminal device as an example for detailed description.

A HARQ retransmission technology may combine forward error correction (forward error correction, FEC) with an automatic repeat request (automatic repeat request, ARQ), to improve communication reliability. When the network device sends a data packet to the terminal device, the data packet may be sent to an antenna port for transmission after FEC encoding and modulation at a physical layer. After the data packet arrives at the terminal device, the data packet may be demodulated and decoded at a physical layer of the terminal device, and a decoding result may be fed back to the network device. Generally, the network device may determine, based on HARQ information fed back by the terminal device, whether data is correctly received. If the terminal device can correctly receive the data packet, the terminal device may send hybrid automatic repeat request acknowledgment (hybrid automatic repeat request acknowledgement, HARQ-ACK) information to the network device. If the terminal device does not correctly receive the data packet, the terminal device sends hybrid automatic repeat request negative acknowledgment (hybrid automatic repeat request negative acknowledgement, HARQ-NACK) information to the network device. After receiving the NACK sent by the terminal device, the network device may send the data packet to the terminal device again.

The network device may allocate an SR time-frequency resource to the terminal device. The terminal device sends SR information on the SR time-frequency resource. When the terminal device needs to apply to the network device for a new uplink data resource, the terminal device may send the SR information on the configured SR time-frequency resource. If the network device obtains the corresponding SR information on the SR resource or detects energy on the SR time-frequency resource, it may be considered that the SR information is positive (positive). If the network device does not obtain the corresponding SR information on the SR resource or does not detect energy on the SR time-frequency resource, it may be considered that the SR information is negative (negative).

When the time-frequency resource used to carry the HARQ information and the time-frequency resource used to carry the SR information partially overlap in time domain, the HARQ information may be sent on the resource carrying the SR information. The to-be-sent SR information is positive, and a time of sending the SR information is earlier than a time of sending the HARQ information. In addition, at the time of sending the SR information, the terminal device has not demodulated and decoded the downlink data packet sent by the network device. In other words, at the time of sending the SR information, the terminal device has not obtained the HARQ information that needs to be fed back for the downlink data packet sent by the network device. In this case, if the terminal device still sends the HARQ information on the resource carrying the SR information, understanding inconsistency of a feedback result may occur between the network device and the terminal device.In this case, the terminal device fails to receive downlink data. For example, at the time of sending the SR information, the terminal device has not obtained the HARQ information that needs to be fed back. In this case, if the terminal device sends the HARQ-ACK information to the network device, after receiving the HARQ-ACK information, the network device may consider that the terminal device successfully receives and correctly decodes the sent downlink data. However, if the terminal device actually does not successfully decode the downlink data and needs to feed back the HARQ-NACK information, understanding inconsistency may occur between the network device and the terminal device. Consequently, the downlink data cannot be retransmitted.

An embodiment of this application provides an information transmission method, to further specify HARQ information that needs to be sent. In this way, understanding consistency can be ensured between the network device and the terminal device.

The following describes in detail the information transmission method provided in this embodiment of this application.

FIG. 2 is a schematic flowchart of an information transmission method according to an embodiment of this application. The method in FIG. 2 may include steps 210 and step 220. The following separately describes step 210 and step 220 in detail.

Step 210: A terminal device receives downlink data sent by a network device, where a time-frequency resource used to carry HARQ information that needs to be fed back for the downlink data and a time-frequency resource used to carry SR information partially overlap in time domain, and a configured time of sending the SR information is earlier than a configured time of sending the HARQ information.

In this embodiment of this application, the terminal device may receive the downlink data (which may also be referred to as a downlink data packet) sent by the network device; and then, the terminal device may demodulate and decode the received downlink data, and may feed back a decoding result to the network device.

Specifically, in this embodiment of this application, the terminal device may apply a feedback technology to the decoding result of the received downlink data. For example, the feedback technology may include a HARQ technology.

It should be understood that content included in the foregoing enumerated feedback information is merely an example for description. This application is not limited thereto. Other information that can indicate a status of receiving the downlink data by the terminal device may fall within the protection scope of this application. For example, the feedback information may further include discontinuous transmission (discontinuous transmission, DTX) information. The DTX information may be used to indicate the terminal device to feed back to the network device whether the received downlink data is correctly demodulated and decoded.

In this embodiment of this application, the terminal device (for example, UE) may receive downlink control information or higher layer signaling sent by the network device. The downlink control information may include, for example, physical uplink control channel (physical uplink control channel, PUCCH) resource indicator (PUCCH resource indicator) signaling. The higher layer signaling may include, for example, radio resource control (radio resource control, RRC) signaling.

The terminal device (for example, UE) may configure, based on the higher layer signaling, the time-frequency resource carrying the SR information. For example, the terminal device may configure, based on SR configuration information in the RRC signaling, the time-frequency resource corresponding to the SR information. The terminal device (for example, UE) may further configure, based on the downlink control information, the time-frequency resource carrying the HARQ information. For example, the terminal device may configure, based on the PUCCH resource indicator signaling in the downlink control information, the time-frequency resource corresponding to the HARQ information.

A manner in which the time-frequency resource carrying the HARQ information that needs to be fed back for the downlink data and the time-frequency resource carrying the SR information partially overlap in time domain is not specifically limited in this embodiment of this application. The resource carrying the HARQ information and the resource carrying the SR information may partially overlap (partial overlap) in any form in time domain. For example, an orthogonal frequency division multiplexing (orthogonal frequency division multiplexing, OFDM) symbol corresponding to the time-frequency resource carrying the SR information in time domain may be completely included in an OFDM symbol of the time-frequency resource carrying the HARQ information in time domain. For another example, an OFDM symbol corresponding to the time-frequency resource carrying the HARQ information in time domain may be alternatively completely included in an OFDM symbol corresponding to the time-frequency resource carrying the SR information in time domain. For another example, the time-frequency resource carrying the SR information in time domain and the time-frequency resource carrying the HARQ information in time domain may have different quantities of corresponding OFDM symbols and different corresponding time lengths. In addition,start symbols may be located in different locations in the two time-frequency resources.

It should be understood that if a start location of the OFDM symbol corresponding to the time-frequency resource carrying the SR information in time domain is before a location of the OFDM symbol corresponding to the time-frequency resource carrying the HARQ information. In other words, a time of sending the SR information on the time-frequency resource corresponding to the SR information is earlier than a time of sending the HARQ information on the time-frequency resource corresponding to the HARQ information.

Step 220: At the configured time of sending the SR information, when the HARQ information is not obtained, hybrid automatic repeat request negative acknowledgement HARQ-NACK information is sent on the time-frequency resource used to carry the SR information.

In this embodiment of this application, if the terminal device has not obtained, at the time of sending the SR information on the time-frequency resource corresponding to the SR information, the HARQ information that needs to be fed back for the received downlink data, the terminal device may send the HARQ-NACK information on the time-frequency resource carrying the SR information.

It should be understood that the terminal device has not obtained, at the time of sending the SR information, the HARQ information that needs to be fed back for the downlink data. In other words, at the moment of sending the SR information, for some reasons, the terminal device has not decoded the downlink data sent by the network device, or the terminal device has not demodulated and decoded the received downlink data, or the terminal device has not generated the HARQ information that needs to be fed back for the received downlink data.

A reason why the terminal device has not obtained the HARQ information at the moment of sending the SR information is not specifically limited in this embodiment of this application. For example, the terminal device has not obtained the HARQ information at the moment of sending the SR information due to incompetent processing capability of the terminal device. For another example, the terminal device has not obtained the HARQ information at the moment of sending the SR information due to insufficient processing time of the terminal device.

In this embodiment of this application, when the terminal device has not obtained the HARQ information at the moment of sending the SR information, the terminal device may send the HARQ-NACK information on the resource carrying the SR information, to indicate that the terminal device has not decoded the downlink data sent by the network device. This can avoid understanding inconsistency between the network device and the terminal device.

Optionally, no matter whether the downlink data is accurately demodulated and decoded, the terminal device does not send the HARQ information to the network device at the configured time of sending the HARQ information that needs to be fed back for the downlink data and on the time-frequency resource used to carry the HARQ information that needs to be fed back for the downlink data.

Optionally, in some embodiments, the time-frequency resource carrying the HARQ information and the time-frequency resource carrying the SR information may be located in one slot (slot). The slot may be configured by using higher layer signaling or downlink control information. The slot may be used to transmit uplink control information. The transmitted uplink control information is not specifically limited in this application. For example, the slot may be used to transmit the HARQ information, or may be used to transmit the SR information.

Optionally, in some embodiments, the time-frequency resource carrying the SR information may be configured by using SR configuration information (configuration information) in RRC signaling sent by the network device. The time-frequency resource for sending the positive SR information and the time-frequency resource for sending the HARQ information partially overlap in time domain, and the moment of sending the SR information is earlier than the moment of sending the HARQ information. In this case, if the terminal device has not obtained, at the moment of sending the SR information, the HARQ information that needs to be transmitted, the terminal device may send the NACK information on the time-frequency resource that carries the SR information and that is configured by using the SR configuration information, thereby avoiding understanding inconsistency between the network device and the terminal device.

It should be understood that a time domain resource carrying the SR information may be configured by using the SR configuration information. When the terminal device needs to apply to the network device for an uplink scheduling resource, the terminal device may send the SR information on the time domain resource. In this case, the SR information may be referred to as positive SR information.

In addition, at the configured time of sending the SR information, when the SR information is positive and the HARQ information is obtained, the terminal device sends hybrid automatic repeat request acknowledgement HARQ-ACK information on the time-frequency resource used to carry the SR information. In this case, the network device may learn that the terminal device has successfully demodulated and decoded the downlink data sent by the network device.

The following describes a specific implementation of the embodiments of this application in more detail with reference to specific examples. It should be noted that the following examples are merely intended to help a person skilled in the art understand the embodiments of this application, instead of limiting the embodiments of this application to a specific value or a specific scenario shown in the examples. A person skilled in the art can apparently make various equivalent modifications or changes according to the examples described above, and such modifications and changes also fall within the scope of the embodiments of this application.

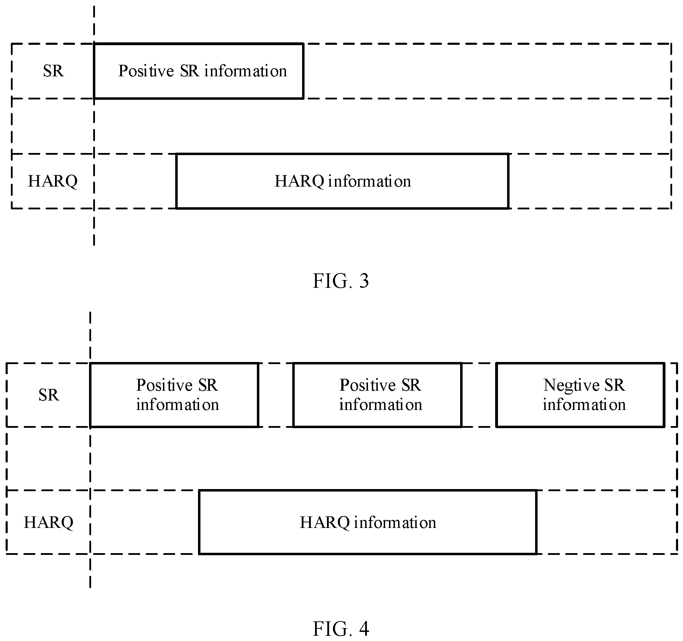

FIG. 3 is a schematic structural diagram in which SR information partially overlaps HARQ information according to an embodiment of this application.

With reference to FIG. 3, when SR information needs to be sent on a time-frequency resource carrying the SR information, the sent SR information is positive SR, and the time-frequency resource carrying the SR information and a time-frequency resource carrying HARQ information partially overlap in time domain. In time domain, a start location of an OFDM symbol corresponding to the time-frequency resource carrying the SR information is before a location of an OFDM symbol corresponding to the time-frequency resource carrying the HARQ information. At a moment of sending the SR information, based on whether a terminal device obtains the HARQ information that is fed back for downlink data sent by a network device, the terminal device may select to send the HARQ information on the resource carrying the SR information.

Case 1: At the moment of sending the SR information, the terminal device may decode, at a physical layer, the downlink data sent by the network device. The terminal device may send the HARQ information on the resource carrying the SR information. If the terminal device can correctly receive and correctly decode the data packet, the terminal device may send HARQ-ACK information to the network device. If the terminal has not correctly received or correctly decoded the data packet, the terminal device may send HARQ-NACK information to the network device. The network device may send the data packet to the terminal device again after receiving the HARQ-NACK sent by the terminal device.

Case 2: If the terminal device has not obtained, at the moment of sending the SR information, the HARQ information that needs to be fed back for the received downlink data, the terminal device may send the HARQ-NACK information on the time-frequency resource carrying the SR information. In this case, the HARQ-NACK information may be used to indicate that the terminal device has not obtained, at the moment of sending the SR information, the information that needs to be fed back for the received downlink data.

Optionally, in some embodiments, the time-frequency resource carrying the SR information may be configured by using SR configuration information (configuration information) in RRC signaling sent by the network device. The time-frequency resource carrying the SR information may be sent in one or more slots (slot) for a plurality of times. The time-frequency resource carrying the HARQ information and the one or more time-frequency resources carrying the SR information may overlap in time domain.

In this embodiment, the positive SR information may be sent on one or the plurality of time-frequency resources carrying the SR information, or the positive SR information may be sent on the plurality of time-frequency resources. This is not limited in this embodiment of this application.

It should be understood that the plurality of time-frequency resources carrying the SR information may correspond to a same resource identifier (resource ID). In other words, the plurality of time-frequency resources carrying the SR information may be time-frequency resources configured by using the SR configuration information sent by the network device. The time-frequency resource may be sent in a plurality of time occasions (occasion) in one slot.

According to actual situations, the terminal device may select to send the SR information on the one or more time-frequency resources carrying the SR information.

The one or more time-frequency resources that are selected by the terminal device for sending the positive SR information and the time-frequency resource for sending the HARQ information partially overlap in time domain, and the moment of sending the positive SR information is earlier than the moment of sending the HARQ information. In this case, if the terminal device has not obtained, at the moment of sending the SR information, the HARQ information that needs to be transmitted, the terminal device may send the NACK information on the one or more time-frequency resources that carry the SR information and that are configured by using the SR configuration information, to indicate that at the moment of sending the positive SR information, the terminal device has not decoded the downlink data sent by the network device, thereby avoiding understanding inconsistency between the network device and the terminal device.

The following describes a specific implementation of the embodiments of this application in more detail with reference to specific examples. It should be noted that the following examples are merely intended to help a person skilled in the art understand the embodiments of this application, instead of limiting the embodiments of this application to a specific value or a specific scenario shown in the examples. A person skilled in the art can apparently make various equivalent modifications or changes according to the examples described above, and such modifications and changes also fall within the scope of the embodiments of this application.

FIG. 4 is a schematic structural diagram in which SR information partially overlaps HARQ information according to another embodiment of this application.

With reference to FIG. 4, a resource that carries SR information and that is configured by using SR configuration information may be sent for three times in a slot in time domain. The three resources carrying the SR information and a resource carrying HARQ information partially overlap in time domain. The three resources carrying the SR information may correspond to one resource identifier (resource ID).

A terminal device may select to send positive SR information on the two time-frequency resources carrying the SR information. Negative SR information sent on the time-frequency resource carrying the SR information may be used to indicate that the SR information is not sent on the time-frequency resource carrying the SR information (that is, the terminal device does not have an uplink scheduling resource request on the time-frequency resource carrying the SR information).

In time domain, a start location of an OFDM symbol corresponding to the selected time-frequency resource carrying the SR information is before a location of an OFDM symbol corresponding to the time-frequency resource carrying the HARQ information. At a moment of sending the SR information, based on whether the terminal device obtains the HARQ information that is fed back for downlink data sent by a network device, the terminal device may select to send the HARQ information on the resource carrying the SR information, thereby avoiding understanding inconsistency between the network device and the terminal device.

Case 1: At the moment of sending the SR information, the terminal device may decode, at a physical layer, the downlink data sent by the network device. The terminal device may send the HARQ information on the resource carrying the SR information. If the terminal device can correctly receive and correctly decode the data packet, the terminal device may send HARQ-ACK information to the network device. If the terminal has not correctly received or correctly decoded the data packet, the terminal device may send NACK information to the network device. The network device may send the data packet to the terminal device again after receiving the HARQ-NACK sent by the terminal device.

Case 2: If the terminal device has not obtained, at the moment of sending the SR information, the HARQ information that needs to be fed back for the received downlink data, the terminal device may send the HARQ-NACK information on the time-frequency resource carrying the SR information. In this case, the HARQ-NACK information may be used to indicate that the terminal device has not obtained, at the moment of sending the SR information, the information that needs to be fed back for the received downlink data.

Optionally, in some embodiments, the time-frequency resource carrying the SR information may be one of a plurality of time-frequency resources that carry the SR information and that are configured by using a plurality of pieces of SR configuration information in RRC signaling sent by the network device. In other words, the network device may use the plurality of pieces of SR configuration information to configure the plurality of time-frequency resources carrying the SR information. The network device may send the positive SR information on one of the plurality of configured time-frequency resources carrying the SR information. The plurality of time-frequency resources carrying the SR information may be located in one slot.

The time-frequency resource for sending the positive SR information by the terminal device and the time-frequency resource for sending the HARQ information partially overlap in time domain, and the moment of sending the SR information is earlier than a moment of sending the HARQ information. In this case, if the terminal device has not obtained, at the moment of sending the SR information, the HARQ information that needs to be transmitted, the terminal device may send the HARQ-NACK information on the time-frequency resource carrying the SR information, thereby avoiding understanding inconsistency between the network device and the terminal device.

The following describes a specific implementation of the embodiments of this application in more detail with reference to specific examples. It should be noted that the following examples are merely intended to help a person skilled in the art understand the embodiments of this application, instead of limiting the embodiments of this application to a specific value or a specific scenario shown in the examples. A person skilled in the art can apparently make various equivalent modifications or changes according to the examples described above, and such modifications and changes also fall within the scope of the embodiments of this application.

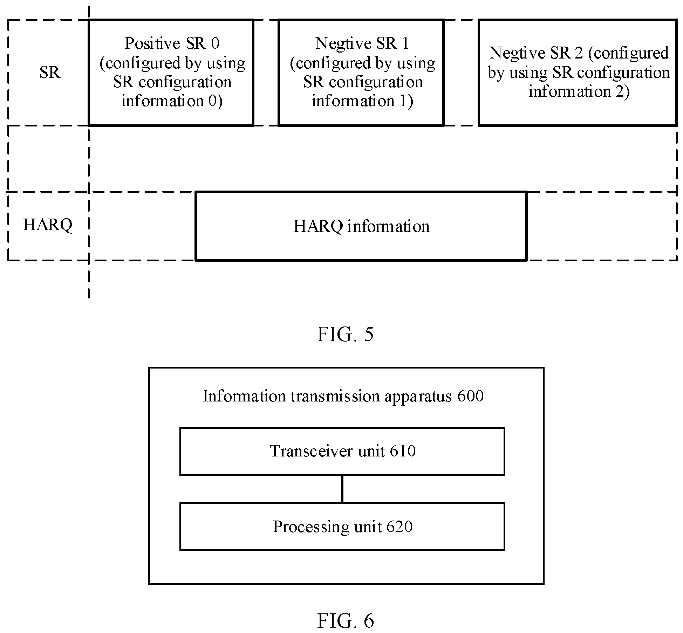

FIG. 5 is a schematic structural diagram in which SR information partially overlaps HARQ information according to another embodiment of this application.

With reference to FIG. 5, in a slot, three pieces of SR configuration information (SR configuration information 0, SR configuration information 1, and SR configuration information 2) sent by a network device may be used to configure three time-frequency resources (SR 0, SR 1, and SR 2) carrying SR information. A terminal device may send positive SR information (that is, positive SR 0) on the time-frequency resource carrying the SR information. Negative SR information may be sent on the time-frequency resources configured by using the SR configuration information 1 and the SR configuration information 2. The sent negative SR information may be used to indicate that the SR information is not sent on the time-frequency resource carrying the SR information (that is, the terminal device does not have an uplink scheduling resource request on the time-frequency resource carrying the SR information).

It should be understood that which time-frequency resource selected by the terminal device in the plurality of SR time-frequency resources to send the positive SR information may be configured by using network information.

In time domain, a start location of an OFDM symbol corresponding to the time-frequency resource carrying the SR information is before a location of an OFDM symbol corresponding to the time-frequency resource carrying the HARQ information. At a moment of sending the SR information, based on whether the terminal device obtains the HARQ information that is fed back for downlink data sent by a network device, the terminal device may select to send the HARQ information on the resource carrying the SR information. Case 1: At the moment of sending the SR information, the terminal device may decode, at a physical layer, the downlink data sent by the network device. The terminal device may send the HARQ information on the resource carrying the SR information. If the terminal device can correctly receive and correctly decode the data packet, the terminal device may send HARQ-ACK information to the network device. If the terminal has not correctly received or correctly decoded the data packet, the terminal device may send HARQ-NACK information to the network device. The network device may send the data packet to the terminal device again after receiving the HARQ-NACK sent by the terminal device.

Case 2: If the terminal device has not obtained, at the moment of sending the SR information, the HARQ information that needs to be fed back for the received downlink data, the terminal device may send the HARQ-NACK information on the time-frequency resource carrying the SR information. In this case, the HARQ-NACK information may be used to indicate that the terminal device has not obtained, at the moment of sending the SR information, the information that needs to be fed back for the received downlink data.

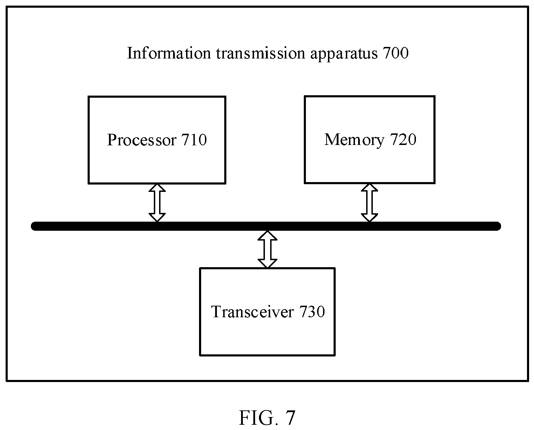

The foregoing describes in detail the information transmission method provided in the embodiments of this application with reference to FIG. 1 to FIG. 5. The following describes in detail an apparatus in the embodiments of this application with reference to FIG. 6 and FIG. 7. It should be understood that, descriptions of the method embodiments correspond to descriptions of the apparatus embodiments. Therefore, for parts that are not described in detail, refer to the method embodiments above.

FIG. 6 is a schematic block diagram of an information transmission apparatus according to an embodiment of this application. The information transmission apparatus 600 may include a transceiver unit 610, configured to receive downlink data sent by a network device. A time-frequency resource used to carry hybrid automatic repeat request HARQ information that needs to be fed back for the downlink data and a time-frequency resource used to carry scheduling request SR information partially overlap in time domain. A configured time of sending the SR information is earlier than a configured time of sending the HARQ information.

A processing unit 620 is configured to: at the configured time of sending the SR information, when the SR information is positive and the HARQ information is not obtained, send hybrid automatic repeat request negative acknowledgement HARQ-NACK information on the time-frequency resource used to carry the SR information.

According to the information transmission apparatus provided in this embodiment of this application, when the time-frequency resource carrying the HARQ information and the time-frequency resource carrying the SR information partially overlap in time domain, if the time of sending the SR information is earlier than the time of sending the HARQ information and the terminal device has not obtained the HARQ information at the time of sending the SR information, the terminal device may send the HARQ-NACK information on the resource carrying the SR information, to indicate that the terminal device has not decoded the downlink data sent by the network device or the terminal device has not generated the HARQ information. This can avoid understanding inconsistency between the network device and the terminal device.

Optionally, in some embodiments, the processing unit 620 is further configured to send the HARQ-NACK information on one or more time-frequency resources used to carry the SR information, where the one or more time-frequency resources carrying the SR information are configured by using one piece of SR configuration information or correspond to a same resource identifier, and the one or more time-frequency resources carrying the SR information and the time-frequency resource carrying the HARQ information partially overlap in time domain.

Optionally, in some embodiments, the processing unit 620 is further configured to send the HARQ-NACK information on the time-frequency resource used to carry the SR information, where the time-frequency resource carrying the SR information is one of a plurality of time-frequency resources configured by using a plurality of pieces of SR configuration information, and the plurality of time-frequency resources are located in one slot.

Optionally, in some embodiments, the time-frequency resource used to carry the HARQ information that needs to be fed back for the downlink data and the time-frequency resource used to carry the SR information are located in a same slot in time domain.

Optionally, in some embodiments, the processing unit 620 is further configured to: at the configured time of sending the SR information, when the SR information is positive and the HARQ information is obtained, send hybrid automatic repeat request acknowledgement HARQ-ACK information on the time-frequency resource used to carry the SR information.

As shown in FIG. 7, an embodiment of this application further provides an information transmission apparatus 700. The information transmission apparatus 700 includes a processor 710, a memory 720, and a transceiver 730. The memory 720 is configured to store an instruction. The processor 710 and the transceiver 730 are configured to execute the instruction stored in the memory 720.

It should be understood that the information transmission apparatus 600 shown in FIG. 6 or the information transmission apparatus 700 shown in FIG. 7 may be configured to perform related operations or procedures in the foregoing method embodiments, and operations and/or functions of the modules in the information transmission apparatus 600 or the information transmission apparatus 700 are respectively intended to implement corresponding procedures in the foregoing method embodiments. Details are not described herein for brevity.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
receiving downlink data sent by a network device, wherein a time-frequency resource used to carry hybrid automatic repeat request HARQ information that needs to be fed back for the downlink data and a time-frequency resource used to carry scheduling request SR information partially overlap in time domain, and a configured time of sending the SR information is earlier than a configured time of sending the HARQ information; and
at the configured time of sending the SR information, when the SR information is positive and the HARQ information is not obtained, sending hybrid automatic repeat request negative acknowledgement HARQ-NACK information on the time-frequency resource used to carry the SR information.

2. The method according to claim 1, wherein the sending HARQ-NACK information on the time-frequency resource used to carry the SR information comprises: sending the HARQ-NACK information on one or more time-frequency resources used to carry the SR information, wherein the one or more time-frequency resources carrying the SR information are configured by using one piece of SR configuration information or correspond to a same resource identifier, and the one or more time-frequency resources carrying the SR information and the time-frequency resource carrying the HARQ information partially overlap in time domain.

3. The method according to claim 1 or 2, wherein the sending HARQ-NACK information on the time-frequency resource used to carry the SR information comprises:
sending the HARQ-NACK information on the time-frequency resource used to carry the SR information, wherein the time-frequency resource carrying the SR information is one of a plurality of time-frequency resources configured by using a plurality of pieces of SR configuration information, and the plurality of time-frequency resources are located in one slot.

4. The method according to any one of claims 1 to 3, wherein the time-frequency resource used to carry the HARQ information that needs to be fed back for the downlink data and the time-frequency resource used to carry the SR information are located in a same slot in time domain.

5. The method according to any one of claims 1 to 4, wherein the method further comprises:
at the configured time of sending the SR information, when the SR information is positive and the HARQ information is obtained, sending hybrid automatic repeat request acknowledgement HARQ-ACK information on the time-frequency resource used to carry the SR information.

6. An information transmission apparatus, comprising:
a transceiver unit, configured to receive downlink data sent by a network device, wherein a time-frequency resource used to carry hybrid automatic repeat request HARQ information that needs to be fed back for the downlink data and a time-frequency resource used to carry scheduling request SR information partially overlap in time domain, and a configured time of sending the SR information is earlier than a configured time of sending the HARQ information; and
a processing unit, configured to: at the configured time of sending the SR information, when the SR information is positive and the HARQ information is not obtained, send hybrid automatic repeat request negative acknowledgement HARQ-NACK information on the time-frequency resource used to carry the SR information.

7. The apparatus according to claim 6, wherein the processing unit is further configured to:
send the HARQ-NACK information on one or more time-frequency resources used to carry the SR information, wherein the one or more time-frequency resources carrying the SR information are configured by using one piece of SR configuration information or correspond to a same resource identifier, and the one or more time-frequency resources carrying the SR information and the time-frequency resource carrying the HARQ information partially overlap in time domain.

8. The apparatus according to claim 6 or 7, wherein the processing unit is further configured to:
send the HARQ-NACK information on the time-frequency resource used to carry the SR information, wherein the time-frequency resource carrying the SR information is one of a plurality of time-frequency resources configured by using a plurality of pieces of SR configuration information, and the plurality of time-frequency resources are located in one slot.

9. The apparatus according to any one of claims 6 to 8, wherein the time-frequency resource used to carry the HARQ information that needs to be fed back for the downlink data and the time-frequency resource used to carry the SR information are located in a same slot in time domain.

10. The apparatus according to any one of claims 6 to 9, wherein the processing unit is further configured to:
at the configured time of sending the SR information, when the SR information is positive and the HARQ information is obtained, send hybrid automatic repeat request acknowledgement HARQ-ACK information on the time-frequency resource used to carry the SR information.

11. A computer readable storage medium, wherein the computer readable storage medium stores a computer program, and the computer program can be used to enable an information transmission apparatus to perform the method according to any one of claims 1 to 5.

12. An information transmission apparatus, wherein the apparatus comprises a processor and a storage medium, the storage medium stores an instruction, and when the instruction is run by the processor, the processor is enabled to perform the method according to any one of claims 1 to 5.
